# EUROPÄISCHE PATENTSCHRIFT

(11) **EP 2 707 596 B1**
(45) Veröffentlichungstag und Bekanntmachung des Hinweises auf die Patenterteilung: **19.10.2016**
(21) Anmeldenummer: 12723103.3
(22) Anmeldetag: 26.04.2012
(51) Int. Cl.: F02N 19/10, B60K 6/00, B60W 20/00, H05B 6/80, B60H 1/03, B60H 1/00

(54) **VERFAHREN ZUM BETREIBEN EINES KRAFTWAGENS MIT EINEM HYBRIDANTRIEB**
METHOD FOR OPERATING A MOTOR VEHICLE WITH A HYBRID DRIVE
PROCÉDÉ DE FONCTIONNEMENT D'UN VÉHICULE À MOTEUR À ENTRAÎNEMENT HYBRIDE

(30) Priorität: 12.05.2011 DE 102011101357
(43) Veröffentlichungstag der Anmeldung: 19.03.2014
(73) Patentinhaber: Audi AG, 85045 Ingolstadt (DE)
(72) Erfinder: PAPAJEWSKI, Jens, 86697 Unterhausen (DE)
(74) Vertreter: Herbst, Matthias Heinz
(86) Internationale Anmeldenummer: PCT/EP2012/001792
(87) Internationale Veröffentlichungsnummer: WO 2012/152381

(56) Entgegenhaltungen:
- DE-A1- 19 701 094
- DE-A1-102007 056 201
- US-A1- 2009 015 023

## Beschreibung

Die Erfindung betrifft ein Verfahren zum Betreiben eines Kraftwagens mit einem Hybridantrieb.

Kraftwagen mit Hybridantrieb besitzen sowohl eine Brennkraftmaschine als auch eine elektrische Antriebsmaschine. Um möglichst wenig Kraftstoff zu verbrauchen, ist es dabei wünschenswert, möglichst oft die elektrische Antriebsmaschine allein zum Antrieb des Kraftwagens zu verwenden oder zumindest einen wesentlichen Teil der Antriebsleistung durch die elektrische Antriebsmaschine bereitzustellen.

Bei tiefen Umgebungstemperaturen ergibt sich dabei allerdings das Problem, dass viele Komponenten des Kraftwagens im kalten Zustand nicht effizient arbeiten. Dies gilt insbesondere für eine Hochvoltbatterie zur Versorgung der elektrischen Antriebsmaschine, bei der im kalten Zustand die maximal entnehmbare Leistung deutlich geringer ist als im warmen Zustand. Auch Antriebskomponenten, die geschmiert werden müssen, können im kalten Zustand nur unter deutlichen Energieverlusten betrieben werden. Dies gilt aufgrund der erhöhten Viskosität des Getriebeöls bei tiefen Temperaturen insbesondere für das Getriebe.

Aus der DE 197 01 094 A1 ist ein Verfahren bekannt, bei welchem ein Kühlmittel einer Brennkraftmaschine mittels eines Mikrowellendurchlauferhitzers auf eine Solltemperatur erwärmt wird. Das Kühlmittel durchströmt ferner einen Wärmetauscher, über welchen es Luft für eine Innenraumbelüftung des Kraftwagens beheizt. Durch die Mikrowellenbeheizung des Kühlmittels kann dieses besonders schnell auf seine Solltemperatur gebracht werden, so dass die Abwärme der Brennkraftmaschine unmittelbar zur Beheizung weiterer Komponenten des Kraftwagens genutzt werden kann.

Aus der DE 10 2007 032 726 A1 ist ferner bekannt, bei Hybridkraftwagen im Rekuperationsbetrieb anfallende elektrische Energie im Fall, dass die Batterie keine weitere Energie aufnehmen kann, durch Lastwiderstände zu dissipieren, wobei die Abwärme zum Erwärmen von Komponenten des Kraftwagens, wie Motor oder Getriebe genutzt werden kann.

Die DE 197 01 094 A1 beschreibt eine Zusatzheizung für Kraftwagen, bei welcher mittels eines Mikrowellendurchlauferhitzers ein Kühlmittel für eine Brennkraftmaschine erwärmt wird, um auch bei kaltem Motor hinreichende Heizleistung für die Innenraumbeheizung bereitzustellen und den Motor schnell auf Betriebstemperatur zu bringen.

Aus der US 7 077 244 B2 ist ein Verfahren zum Starten eines Kraftwagens bekannt, bei welchem vor dem Start des Kraftwagens überprüft wird, ob alle Kraftwagenkomponenten eine vorgegebene Mindesttemperatur aufweisen. Ist dies nicht der Fall, so werden zu kalte Komponenten vorgeheizt und erst bei Erreichen der vorgegebenen Mindesttemperatur der Motorstart erlaubt.

Die DE 2 229 195 A1 offenbart eine Mikrowellenheizung für Akkumulatoren, bei welcher Mikrowellen direkt in den Akkumulator eingestrahlt werden, um diesen auf Betriebstemperatur zu bringen.

Bei Hybridkraftwagen tritt hierbei jedoch das Problem auf, dass bei rein elektrischem Betrieb durch die Brennkraftmaschine keine Abwärme produziert wird, die zur Beheizung weiterer Komponenten genutzt werden könnte.

Der vorliegenden Erfindung liegt somit die Aufgabe zugrunde, ein Verfahren der eingangs genannten Art bereitzustellen, mittels welchem ein Hybridkraftwagen besonders energiesparend betrieben werden kann.

Diese Aufgabe wird durch ein Verfahren mit den Merkmalen des Patentanspruchs 1 gelöst.

Bei einem solchen Verfahren wird wenigstens ein Betriebsmedium des Kraftwagens mittels einer dielektrischen Heizvorrichtung, also einer Mikrowellenheizung, auf eine vorgegebene Temperatur erwärmt. Beim dielektrischen Heizen wird das Betriebsmedium mit Mikrowellenstrahlung bestrahlt. Moleküle des Betriebsmediums, die ein Dipolmoment besitzen, schwingen dabei mit dem eingestrahlten Anregungsfeld. Durch Stoßprozesse zwischen den Molekülen der Flüssigkeit wird die eingestrahlte Energie als Wärmeenergie gleichmäßig in dem Betriebsmedium verteilt. Da es sich hierbei nicht um einen Absorptionsprozess im eigentlichen Sinne handelt, muss die Frequenz der Mikrowellenstrahlung nicht genau an das Betriebsmedium angepasst werden, so dass das Verfahren mit einer Vielzahl von unterschiedlichen Medien Anwendung finden kann. Um ein besonders effizientes Aufheizen zu ermöglichen, ist es dabei zweckmäßig, den mit Mikrowellen bestrahlten Aufnahmeraum mit einer metallischen Beschichtung zu versehen. Diese reflektiert die Mikrowellenstrahlung, so dass Energieverluste durch austretende Strahlung vermieden werden.

Durch das dielektrische Heizen wird die Energie unmittelbar in das gesamte bestrahlte Volumen eingebracht. Die Erwärmung ist somit unabhängig von der Wärmeleitfähigkeit des Mediums und der das Medium ungebenden Behälterwandung. Daher kann eine besonders hohe Aufheizrate erzielt werden. Aus dem gleichen Grund ist die Aufheizrate auch im Wesentlichen unabhängig von der Geometrie des zu beheizenden flüssigkeitsgefüllten Raums, so dass ein der Aufnahmebehälter für die Flüssigkeit nicht speziell angepasst werden muss, um eine Anwendung des Verfahrens zu ermöglichen.

Aufgrund der besonders guten Effizienz des dielektrischen Heizens kann mittels des erfindungsgemäßen Verfahrens sichergestellt werden, dass auch bei tiefen Außentemperaturen die Betriebsmedien des Hybridkraftwagens-und damit die von ihnen durchströmten Komponenten - besonders schnell auf ihre optimale Betriebstemperatur gebracht werden können. Hierdurch werden Energieverluste durch nicht-optimale Betriebstemperaturen weitestgehend vermieden, so dass der Hybridkraftwagen besonders verbrauchsarm und mit besonders geringem Kohlendioxidausstoß betrieben werden kann.

Ein weiterer Vorteil des erfindungsgemäßen Verfahrens liegt darin begründet, dass zum dielektrischen Heizen lediglich elektrische Energie benötigt wird. Im Gegensatz zu bekannten Heizverfahren, welche die Abwärme der Brennkraftmaschine als Energiequelle benutzen, kann das erfindungsgemäße Verfahren daher auch im rein elektrischen Betrieb des Hybridkraftwagens Anwendung finden.

Erfindungsgemäß ist ferner vorgesehen, eine Aufheizung immer dann durchzuführen, wenn eine Umgebungstemperatur des Kraftwagens unterhalb eines vorgegebenen Schwellwertes liegt. Dieser ist zweckmäßigerweise so gewählt, dass unter den vorliegenden Umgebungsbedingungen eine Aufheizung des Betriebsmediums aufgrund von Reibungsverlusten, elektrischer Verlustleistung in der Hochvoltbatterie oder dergleichen, nicht schnell genug verläuft, um eine signifikante Verbrauchssteigerung zu vermeiden.

Bei einer besonders bevorzugten Ausführungsform der Erfindung ist das zu erwärmende Betriebsmedium ein Kühlmedium für eine Hochvoltbatterie des Kraftwagens. Bei längerem Betrieb, insbesondere unter hoher Leistungsentnahme, entwickeln Hochvoltbatterien beträchtliche Wärmemengen und müssen daher aktiv gekühlt werden. Beim Starten des Kraftwagens im kalten Zustand oder unter ähnlichen Bedingungen, unter welchen die Hochvoltbatterie deutlich kälter ist, als ihre optimale Betriebstemperatur, kann das aktive Kühlsystem der Batterie jedoch auch genutzt werden, um diese zu erwärmen. Aufgrund der hohen Aufheizrate, die durch die dielektrische Erwärmung erzielt werden kann, ist es so möglich, die Hochvoltbatterie besonders schnell auf ihre optimale Betriebstemperatur zu bringen, so dass in kürzester Zeit die maximal mögliche Leistung entnommen werden kann. Dies ermöglicht es, den Hybridkraftwagen auch unmittelbar nach dem Start oder bei besonders kalten Umgebungstemperaturen in einem rein elektrischen Betriebsmodus zu betreiben, ohne dass unterstützende Antriebsenergie von der Brennkraftmaschine zur Verfügung gestellt werden muss. Besonders zweckmäßig ist es dabei, die dielektrische Heizvorrichtung unmittelbar in die Batterie zu integrieren. Dies kann insbesondere bei Batterien mit einer sogenannten Bodenplattenkühlung Anwendung finden. Auf diese Weise lässt sich eine besonders kompakte Bauform schaffen.

Zusätzlich oder alternativ können auch weitere Betriebsmedien des Kraftwagens dielektrisch beheizt werden. Besonders vorteilhaft ist dies für Schmierstoffe des Kraftwagens, insbesondere für das Getriebeöl. Durch das dielektrische Beheizen kann die temperaturabhängige Viskosität des Getriebeöls besonders schnell auf den optimalen Wert eingestellt werden, so dass im Antriebsstrang besonders geringe Energieverluste auf Grund der inneren Reibung des Schmiermittels auftreten.

Neben einer schnellen anfänglichen Aufheizung nach einem Kaltstart des Kraftwagens kann das Verfahren auch besonders zweckmäßig im Rekuperationsbetrieb des Kraftwagens Anwendung finden. In diesem Betriebszustand befindet sich der Kraftwagen im Schubbetrieb, wobei die elektrische Antriebsmaschine als Generator wirkt und die Hochvoltbatterie auflädt.

Gerade hier ist es besonders wichtig, die Reibungsverluste im Antriebsstrang zu vermindern, um einen möglichst großen Anteil der Bewegungsenergie oder potentiellen Energie des Kraftwagens zurückzugewinnen und der Hochvoltbatterie zuführen zu können.

In einer weiteren vorteilhaften Ausgestaltung der Erfindung wird eine Aufheizung dann durchgeführt, wenn eine Brennkraftmaschine des Kraftwagens nicht aktiv ist. In diesem Betriebszustand liegt kaum ungenutzte Abwärme vor, die zur Erwärmung des Betriebsmediums genutzt werden könnte, so dass der Einsatz der dielektrischen Heizvorrichtung hier besonders energieeffizient ist.

Besonders vorteilhaft ist es schließlich, zur Energieversorgung der dielektrischen Heizvorrichtung die Hochvoltbatterie des Kraftwagens zu nutzen. Diese stellt die notwendige Leistung zur Verfügung, um eine besonders schnelle Aufheizung des Betriebsmediums erreichen zu können.

Im Folgenden wird die Erfindung in einer bevorzugten Ausführungsform anhand der Zeichnung näher erläutert. Es zeigen:
- Fig. 1:: eine schematische Darstellung eines Antriebssystems eines Hybridkraftwagens und
- Fig. 2:: ein Diagramm zur Veranschaulichung der Temperaturabhängigkeit der Schleppkraft eines Kraftwagens.

Ein im Ganzen mit 10 bezeichnetes Antriebssystem für einen Hybridkraftwagen umfasst eine Brennkraftmaschine 12 und eine elektrische Antriebsmaschine 14 auf. Die Brennkraftmaschine 12 kann über eine erste Kupplung 16 mit der elektrischen Antriebsmaschine 14 gekuppelt werden, welche ihrerseits über eine zweite Kupplung 18 mit einem Automatikgetriebe 20 kuppelbar ist. Von diesem wird die Antriebsenergie über den restlichen, in der Figur nicht dargestellten Antriebsstrang auf die ebenfalls nicht gezeigten Räder des Kraftwagens übertragen.

Zur Versorgung der elektrischen Antriebsmaschine 14 mit elektrischem Strom dient eine Hochvoltbatterie 22, die ein Hochvoltbordnetz 24 des Kraftwagens speist. Über einen Wechselrichter 26 wird die Spannung des Hochvoltbordnetzes 24 in die für den Betrieb der elektrischen Antriebsmaschine 24 notwendige dreiphasige Spannung gewandelt. Ein Gleichstromwandler 28 verbindet das Hochvoltbordnetz 24 ferner mit einem Niedervoltbordnetz 30, welches zudem über eine eigene 12V-Batterie 32 verfügt.

Je nach Kupplungszustand der Kupplungen 16, 18 sind im Antriebssystem 10 unterschiedliche Betriebsmodi realisierbar. Neben einem reinen Verbrennungskraftbetrieb und einem rein elektrischen Betrieb können auch beide Antriebsmaschinen 12, 14 gleichzeitig Energie in den Antriebsstrang einspeisen. In diesem Betriebszustand wird die Brennkraftmaschine 12 an ihrem optimalen Arbeitspunkt betrieben, während die elektrische Antriebsmaschine die Differenz zwischen der von der Brennkraftmaschine 12 in diesem Zustand gelieferten Leistung und der tatsächlich angeforderten Leistung liefert. Im Bremsbetrieb oder beim antriebslosen Rollen entlang eines Gefälles kann die elektrische Antriebsmaschine 14 als Generator betrieben werden, so dass kinetische bzw. potentielle Energie des Kraftwagens in elektrische Energie gewandelt und zum Laden der Hochvoltbatterie 22 genutzt werden kann.

Beim rein elektrischen Betrieb des Antriebssystems 10 steht keine Abwärme der Brennkraftmaschine 12 zur Verfügung, die zu Heizzwecken genutzt werden könnte. Dies ist insbesondere beim Kaltstart des Kraftwagens bei tiefen Außentemperaturen problematisch, da die maximale, der Hochvoltbatterie 22 entnehmbare Leistung stark temperaturabhängig ist. Unter solchen Bedingungen ist ein rein elektrischer Betrieb daher nur eingeschränkt möglich. Um dieses Problem zu umgehen, ist in einem Kühlmittelkreislauf 34 der Hochvoltbatterie 22 eine dielektrische Heizvorrichtung in Form eines Mikrowellendurchlauferhitzers 36 vorgesehen. Durch das dielektrische Heizen des Kühlmediums kann die Hochvoltbatterie 22 besonders schnell auf ihre optimale Betriebstemperatur gebracht werden, so dass ein rein elektrischer Betrieb auch bei tiefen Umgebungstemperaturen möglich ist. Alternativ zur in der Figur gezeigten Ausführungsform kann die Heizvorrichtung 36 auch direkt in die Hochvoltbatterie 22 integriert werden, um eine besonders bauraumsparende Variante zu schaffen.

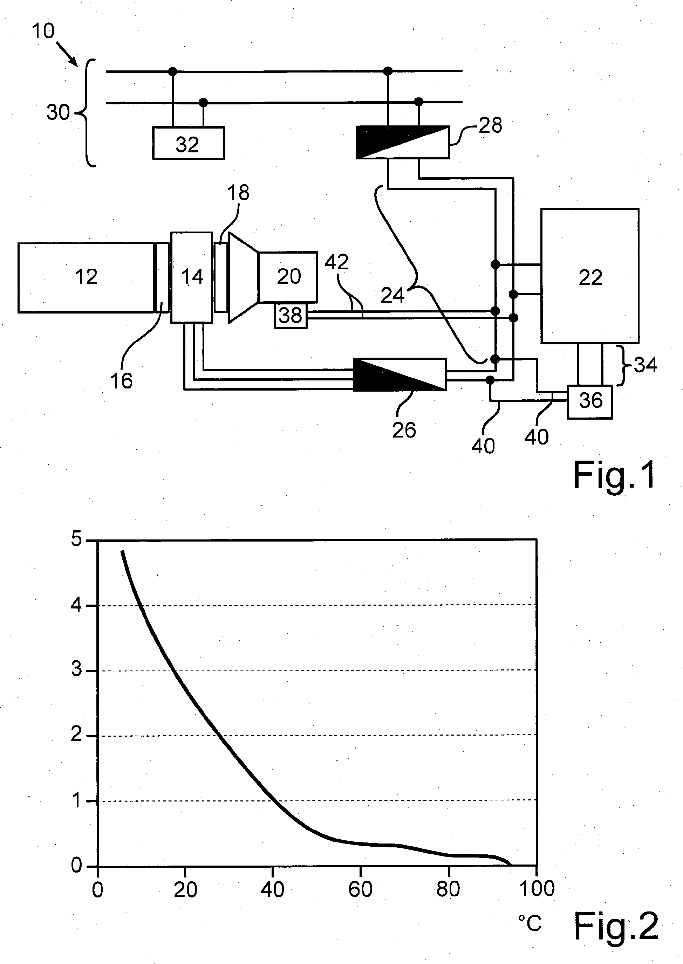

Eine weitere dielektrische Heizvorrichtung 38 ist zum Beheizen eines Getriebeöls des Getriebes 20 vorgesehen. Da das Getriebeöl bei tiefen Temperaturen eine hohe Viskosität aufweist, treten bei solchen Bedingungen Verluste im Getriebe aufgrund der inneren Reibung des Getriebeöls auf. Die durch die Viskosität des Getriebeöls verursachten Schleppkräfte sind in Fig. 2 in Abhängigkeit von der Öltemperatur aufgetragen. Durch das schnelle und effiziente Beheizen des Getriebeöls mittels der Heizvorrichtung 38 können solche viskositätsbedingten Verluste reduziert werden, so dass auch unmittelbar nach einem Kaltstart des Kraftwagens ein besonders energiesparender Betrieb möglich wird.

Beide dielektrische Heizvorrichtungen 36, 38 werden über jeweilige Leitungen 40, 42 aus dem Hochvoltbordnetz 24 mit Energie versorgt. Ihr Betrieb ist daher unabhängig von der Brennkraftmaschine 12 möglich, so dass das schnelle Aufheizen von Hochvoltbatterie 22 und Getriebe 20 in jedem Betriebszustand des Kraftwagens möglich ist. Die von den dielektrischen Heizvorrichtungen 36, 38 bestrahlten Flüssigkeitsräume sind ferner zweckmäßigerweise mit Metall ausgekleidet, welches die Mikrowellen reflektiert, so dass die jeweiligen Betriebsflüssigkeiten besonders effizient aufgeheizt werden und das Austreten von Mikrowellenstrahlung in die Umgebung verhindert wird.

## Patentansprüche

1. Verfahren zum Betreiben eines Kraftwagens mit einem Hybridantrieb (10), bei welchem zumindest ein Betriebsmedium des Kraftwagens mittels einer dielektrischen Heizvorrichtung (36, 38), welche von dem Betriebsmedium durchströmt wird, auf eine vorgegebene Solltemperatur aufgeheizt wird, wobei die dielektrische Heizvorrichtung aus einem Hochvoltbordnetz (24) des Kraftwagens mit Energie versorgt wird,
mit den Schritten:
a) Feststellen, ob ein Kaltstart vorliegt,
b) Ermitteln der Umgebungstemperatur,
c) Bei Vorliegen eines Kaltstarts und bei Unterschreiten eines vorgegebenen Schwellenwerts für die Umgebungstemperatur und wenn eine Brennkraftmaschine (12) des Kraftwagens nicht in Betrieb ist:
d) Aufheizen des zumindest einen Betriebsmediums.

2. Verfahren nach Anspruch 1,
**dadurch gekennzeichnet, dass**
das Betriebsmedium ein Kühlmedium einer Hochvoltbatterie (22) des Kraftwagens ist.

3. Verfahren nach Anspruch 1 oder 2,
**dadurch gekennzeichnet, dass**
das Betriebsmedium ein Getriebeöl des Kraftwagens ist.

4. Verfahren nach einem der Ansprüche 1 bis 3,
**dadurch gekennzeichnet, dass**
das Betriebsmedium bei einem Rekuperationsbetrieb des Kraftwagens aufgeheizt wird.

## Claims

1. A method for operating a motor vehicle with a hybrid drive (10), the method comprising heating at least one operating medium of the motor vehicle to a predefined desired temperature by a dielectric heating device (36, 38) through which the operating medium flows, wherein the dielectric heating device is supplied with energy from a high-voltage wiring system (24) of the motor vehicle, the method comprising the steps of:
a) determining whether a cold start has occurred,
b) sensing the ambient temperature,
c) in the event of a cold start, and if the ambient temperature is below a predefined desired temperature, and if an internal combustion engine (12) of the motor vehicle is not in operation:
d) heating the at least one operating medium.

2. The method according to claim 1,
**characterized in that**
the operating medium is a coolant of a high-voltage battery (22) of the motor vehicle.

3. The method according to claim 1 or 2,
**characterized in that**
the operating medium is a transmission oil of the motor vehicle.

4. The method according to any of claims 1 to 3,
**characterized in that**
the operating medium is heated in a recuperation mode of the motor vehicle.

## Revendications

1. Procédé de fonctionnement d'un véhicule automobile avec un moteur hybride (10), selon lequel au moins un fluide de fonctionnement du véhicule automobile est chauffé à une température de consigne prescrite au moyen d'un dispositif de chauffage diélectrique (36, 38) qui est parcouru par le fluide de fonctionnement, le dispositif de chauffage diélectrique étant alimenté en énergie à partir d'un réseau de bord à haute tension (24) du véhicule automobile,
avec les étapes :
a) détermination du fait qu'il s'agit ou non d'un démarrage à froid,
b) détermination de la température ambiante,
c) dans le cas d'un démarrage à froid et lorsque la température ambiante est inférieure à une valeur de seuil prescrite et si un moteur à combustion interne (12) du véhicule automobile n'est pas en fonctionnement :
d) chauffage de l'au moins un fluide de fonctionnement.

2. Procédé selon la revendication 1, **caractérisé en ce que** le fluide de fonctionnement est un fluide de refroidissement d'une batterie à haute tension (22) du véhicule automobile.

3. Procédé selon la revendication 1 ou 2, **caractérisé en ce que** le fluide de fonctionnement est une huile à engrenages du véhicule automobile.

4. Procédé selon l'une des revendications 1 à 3, **caractérisé en ce que** le fluide de fonctionnement est chauffé lors d'un fonctionnement en récupération du véhicule automobile.
